Europäisches Patentamt

European Patent Office

Office européen des brevets

(11) Publication number: **0 180 442**
**A2**

## (12) EUROPEAN PATENT APPLICATION

(21) Application number: **85307770.9**

(22) Date of filing: **28.10.85**

(51) Int. Cl.⁴: **C 12 G 3/08**

(30) Priority: **29.10.84 GB 8427334**

(43) Date of publication of application: **07.05.86**
**Bulletin 86/19**

(84) Designated Contracting States: **AT BE CH DE FR GB IT LI LU NL SE**

(71) Applicant: **A.G. (PATENTS) LIMITED, Allied House 156 St.John Street, London, EC1P 1AR (GB)**

(72) Inventor: **Davies, Malcolm Roland, Marebrook Cottage Newborough, Staffordshire DE13 8SP (GB)**
Inventor: **Martin, Peter Alan, 43 The Lawns, Rolleston on Dove Burton-on-Trent, Staffordshire DE13 9DA (GB)**

(74) Representative: **Holmes, Michael John et al, Frank B. Dehn & Co. European Patent Attorneys Imperial House 15-19 Kingsway, London, WC2B 6UZ, (GB)**

(54) **Process for the production of alcoholic beverages.**

(57) A method of production of high strength beers is described. The method, which can be used to produce beers with an original specific gravity of greater than 1.060, includes the step of concentrating a beer of lower original specific gravity.

EP 0 180 442 A2

- 1 -

EY 145-380

PROCESS FOR THE
PRODUCTION OF ALCOHOLIC BEVERAGES

The present invention relates to a fermentation process for the production of alcoholic beverages. More particularly, it relates to a concentration process for the production of beers with high original specific gravities. The expression 'original specific gravity' used herein in relation to the strength of a beer is employed in its conventional sense and, in the case of a beer produced without concentration or dilution, is the specific gravity of the wort before fermentation. Where a concentration step has taken place, as in the process of the present invention, the original specific gravity is derived by calculation. The ethanol concentration of the beer in question is determined by distillation and related by standard tables to the degrees of specific gravity which would be lost in actually fermenting to that concentration; the 'lost' specific gravity is then added to the specific gravity of the beer after distillation to yield the value of the original specific gravity (J.Inst. Brewing, 1975, 81, 318). Consequently, as used herein the word 'original' used in relation to specific gravity of a beer produced by concentration does not relate to the specific gravity of the original wort but to the value calculated as above.

The average original specific gravity of retailed normal strength beers is about 1.030 to 1.050 (7.5° to 12.5° Plato). Higher strength beers usually have an original specific gravity over 1.060 (15° Plato), and include such drinks as strong ales and barley wines. Such drinks are characterised, however, not only by their high alcohol content, but also by their very strong and characteristic flavour, which is unpleasant to some palates. Such higher strength beers are also difficult and costly to produce.

The flavour profile of beers is governed to a large extent by the level and balance of esters and higher alcohols present. The relationship of fermentation gravity to ester formation is exponential and often takes a sudden upward turn at around 1.060 - 1.070 original specific gravity (15° -17.5° Plato). Beyond this point the rate of ester formation during brewing can be so extensive as to create a taste beyond the generally accepted threshold. Attempts have been made to reduce the amounts of esters produced, for example, by varying the yeasts used, but it has been found that the point of rapid increase of ester formation, i.e. above about 1.060 - 1.070 original specific gravity (15° -17.5° Plato), is approximately the same whichever yeast is used.

Other tested methods of controlling ester formation include brewing at higher temperatures, adding wort lipids and oxygenating the fermentation. However, these methods have all shown inherent disadvantages, including flavour degradation, change in pH, variance of head retention and higher costs.

Other problems in the process and product can be pinpointed. High gravity brewing necessitates the preparation of strong worts using techniques such as parti-gyling (that is the selection of the first runnings from the mash tun without the conventional dilution caused by sparging the residual malt grains), supplementation of conventional wort with malt syrup, evaporation of conventional wort by extensive boiling, or a combination of these. The use of parti-gyling is relatively uneconomic in that the more dilute wort produced by subsequently sparging the malt grains must find some alternative use which may require supplementation by more expensive materials.

Supplementation with malt syrups can give rise to strong side-flavours, whilst extensive evaporation by boiling affects the aroma and flavour in a detrimental fashion. Furthermore, brewing a higher strength beer by conventional techniques tends to lower the utilisation of the bittering components of the hops to a much greater extent than normal strength worts/beers, and the technology and time required to produce an acceptable drink has to be passed on to the consumer in the form of higher prices. Moreover, high gravity fermentations arefrequently lengthy in order to achieve the desired high alcohol levels and such high alcohol levels, usually over 10%, often result in yeast death and the production of associated autolysis products.

The problems of producing higher strength beers do not stop with fermentation. Long maturation times are required for the removal of 'off' flavours and for the development of acceptable flavours and aromas. Furthermore, long periods of cold storage are required to stabilise the beer and the addition of various acceptable stabilisers such as adsorbants or absorbants must be undertaken in order to obtain haze stability and adequate physical shelf life. It will be appreciated that the need for storage and refrigeration facilities required for these post-fermentation treatments substantially increases the cost of production.

It can be seen from the above that there are a considerable number of problems associated with the brewing of conventional higher strength beers. The flavours and aromas are often unacceptable to many beer drinkers and the product is necessarily expensive.

Therefore there is a need for an economic method of production of higher strength beers having flavour profiles which differ from those of known high gravity beers and which are more acceptable to a wider range of customers.

A method has now been developed which attempts to solve the problems outlined above. It has been found that conventional beers may be brewed at normal strength and then concentrated and processed after primary fermentation to give final beers of higher strength having a novel flavour profile.

It has been discovered that fermentation at lower original specific gravities followed by concentration provides a means of producing higher strength beers of greatly improved flavour.

It has previously been proposed to concentrate beer for the purpose of reducing transport costs, the concentrated beer being, however, intended for dilution before sale to a final beer of normal strength, that is having an original specific gravity less than 1.060. By the term 'final beer' we mean a beer intended for drinking directly in contrast to a beer concentrate intended for dilution prior to drinking. It has not previously been proposed to produce a beer concentrate as a final beer or even to dilute a beer concentrate to a concentration above normal strength. It has not previously been appreciated that higher strength beers of greatly improved flavour could be produced by fermentation at lower specific gravities followed by concentration.

According to the invention, therefore, we provide a method for the production of a final beer having an original specific gravity greater than 1.060 (15° Plato) which comprises brewing a beer at an original specific gravity in the range of 1.020-1.070 (5° to 17.5° Plato) and then concentrating this beverage to a final beer having increased original specific gravity without significant loss or degradation of alcohol or flavour components.

By the expression a 'final beer' we mean a beer to be retailed directly for drinking. This is in contrast to certain proposed beer concentrates which may have ethanol concentrations corresponding to original specific gravities above 1.060 but which are intended for dilution at the point of sale to a normal strength beer, that is to a beer at an ethanol concentration corresponding to an original specific gravity below 1.060. One may, however, carry out the concentration process in two steps, namely concentration to a high ethanol level followed by limited dilution to an ethanol concentration which is still above that corresponding to an original specific gravity of 1.060.

In order to avoid significant loss or degradation of alcohol or flavour components it is desirable to carry out the concentration step at low temperatures.

Preferred methods of concentration include freeze concentration and concentration by molecular filtration with or without externally applied pressure e.g. by reverse osmosis, freeze concentration being especially preferred. In freeze concentration, the water is removed in a high state of purity from the beer as ice crystals. The step of freeze concentration is with advantage carried out in an enclosed system without vapour space, thus avoiding atmosphere contact and minimising loss of volatiles.

By brewing at conventional original specific gravity levels (usually about 1.030 to 1.070; 7.5° to 17.5° Plato) the whole of the wort obtained from the extraction vessel can be efficiently used without resorting to parti-gyle techniques to produce a stronger wort, since the final product alcohol concentration required is not achieved during fermentation. Other fermentable additions to the wort, which contribute to the heavy, sweet and often cloying character of conventional high strength beers are not needed and beers having a more widely acceptable flavour profile may thereby be obtained.

By freeze concentration it is possible to concentrate beers to an original specific gravity of about 1.220 (55° Plato), well above the usual limit of 1.110 (27.5° Plato) for high strength beers, and to obtain alcohol levels of about 25% or more. If concentration to an original specific gravity above the desired final original specific gravity is effected, then subsequent dilution, for example to a final original specific gravity in the range 1.060-1.110 (15° to 27.5° Plato), will usually be required. When highly concentrated beers are to be produced, it may be advantageous to purge carbon dioxide from the initial beer, for example using nitrogen, before freeze concentration.

Since the method of the invention involves the use of normal strength worts, the undesirable effects of higher strength worts are avoided. Different yeast strains may be used, giving more variety in the end product. Thus, the fermented product before concentration may have a wide range of flavour characteristics which will be reflected in the flavour of the final high strength product.

Since little yeast death occurs, there are fewer undesirable side products, and the ester content can be kept to a more acceptable level than with conventional higher strength beers produced by fermentation at final product gravity. Furthermore, a healthy crop of yeast can be produced for subsequent use.

If freeze concentration is used as the method of concentration, the low temperatures involved automatically stabilise the beverage against subsequent haze formation and the long cold storage times required to stabilise conventional higher strength beers are largely obviated.

Economically, the process has advantages over conventional techniques. Less time is needed in storage, more control can be kept over the process, and fewer processing steps are required.

The invention will now be illustrated by means of the following Examples.

Example 1

3570 litres of a beer were subjected to freeze concentration. The beer was of a lager type and had an initial original specific gravity of 1.0605 and an ethanol content of 6.97 % v/v. The freeze concentration apparatus comprised a GFC.W6 pilot plant supplied by Messrs Grenco of s'Hertongenbosch, Holland (see British Patents 1311565, 1322197, 1427414, 1440909, 1589477 and 2023564) containing a refrigeration unit operating with Freon R22, a scraped surface heat exchanger, a stirred recrystal-lisation vessel, a discontinuous piston operated wash column and expansion vessel for final product together with all necessary pumps, controls etc. This plant had a water removal capacity of 10-15 l/hr.

The beer to be concentrated was cooled to freezing point after which ice formation took place in the scraped surface heat exchanger. The mixture of larger and very small ice crystals together with the beer was then pumped into the recrystalliser where the larger crystals grew to large spherical crystals and the very small crystals melted. After an ice concentration of around 30 % had been reached in the recrystalliser, the wash column was started to separate the ice crystals from the partially concentrated beer. This beer, together with beer that had still to be concentrated, was fed back into the scraped surface exchanger. When the desired level of beer concentration had been reached the concentrated beer was taken, via an expansion vessel, into a product storage tank.

The beer was thus recycled through the freeze concentration apparatus until the original specific gravity had risen to 1.160 at which point the withdrawal of concentrated beer was commenced and a total volume of 1350 litres obtained at an original specific gravity of 1.160 and an ethanol content of 18.4 % v/v.

The beer was then filtered and reconstituted with carbonated, deaerated water to an original specific gravity of 1.0805 and an ethanol content of 9.58 % v/v.

Example 2

680 hectolitres of a beer were subjected to freeze concentration. The beer was of an ale type and had an initial original specific gravity of 1.0605 and an ethanol content of 6.51 % v/v. This beer was concentrated in exactly the same manner as in Example 1 except that withdrawal of concentrated beer was commenced at an original specific gravity of 1.100 and an ethanol content of around 11.5 % v/v. A total volume of 410 hectolitres was obtained at an original specific gravity of 1.0993 and an ethanol content of 11.4 % v/v. The beer concentrate was then filtered, carbonated and examined at this original specific gravity and ethanol content without reconstitution.

The beers obtained from each of the above Examples were compared with appropriate competitive products and shown to be preferred for taste and aroma to these products and additionally to possess a more desirable ester balance. Results obtained from analysis are indicated in the accompanying Table.

| Parameters Measured | Example 1 | Competitive Commercial Sample 1 | Example 2 | Competitive Commercial Sample 2 |
|---|---|---|---|---|
| Original Specific Gravity | 1.0805 | 1.0803 | 1.0993 | 1.0952 |
| % Ethanol (v/v) | 9.58 | 9.11 | 11.40 | 10.45 |
| Acetaldehyde (ppm) | 4.00 | 7.00 | 6.00 | 11.00 |
| Ethyl acetate (ppm) | 27.00 | 38.00 | 35.00 | 38.00 |
| Isoamyl acetate (ppm) | 1.5 | 2.5 | 2.7 | 6.7 |

Claims

1.   A method for the production of a final beer having an original specific gravity greater than 1.060 which comprises brewing a beer at an original specific gravity in the range 1.020 to 1.070 and then concentrating this beverage to produce a final beer having increased original specific gravity without significant loss or degradation of alcohol or flavour components.

2.   A method as claimed in claim 1 wherein the concentration step is performed at low temperature.

3.   A method as claimed in claim 1 or claim 2 wherein the concentration step is freeze concentration.

4.   A method as claimed in claim 3 wherein the freeze concentration is carried out in an enclosed system without vapour space.

5.   A method as claimed in claim 1 or claim 2 wherein the concentration step is molecular filtration.

6.   A method as claimed in any of the preceding claims in which the final beer has an original specific gravity in the range 1.060 to 1.110.

7.   A final beer having an original specific gravity greater than 1.060 produced by a method as claimed in·any preceding claim.